**Europäisches Patentamt**

**European Patent Office**

**Office européen des brevets**

(19)

(11) Veröffentlichungsnummer : **0 410 162 B1**

(12) # EUROPÄISCHE PATENTSCHRIFT

(45) Veröffentlichungstag der Patentschrift :
**23.09.92 Patentblatt 92/39**

(51) Int. Cl.$^5$ : **B64C 13/16, G05D 1/08**

(21) Anmeldenummer : **90112570.8**

(22) Anmeldetag : **02.07.90**

(54) **Einrichtung zur Seitenruder-Trimmung.**

(30) Priorität : **28.07.89 CH 2803/89**

(43) Veröffentlichungstag der Anmeldung :
**30.01.91 Patentblatt 91/05**

(45) Bekanntmachung des Hinweises auf die
Patenterteilung :
**23.09.92 Patentblatt 92/39**

(84) Benannte Vertragsstaaten :
**CH DE FR GB IT LI**

(56) Entgegenhaltungen :
**EP-A- 0 268 041**
**US-A- 2 057 877**
**US-A- 4 281 811**

(73) Patentinhaber : **PILATUS FLUGZEUGWERKE
AG**
**CH-6370 Stans (CH)**

(72) Erfinder : **Turi, Alberto**
**Obgassweg 4**
**CH-6374 Buochs (CH)**
Erfinder : **Cervia, Albino**
**Stanserstrasse 32**
**CH-6373 Ennetbürgen (CH)**
Erfinder : **Barmettler, Theo**
**Am Schüpfgraben 24**
**CH-6374 Buochs (CH)**
Erfinder : **Zimmermann, Otto**
**Hofurlistrasse 41**
**CH-6373 Ennetbürgen (CH)**

(74) Vertreter : **Hunziker, Kurt**
**Oerlikon-Contraves AG Schaffhauserstrasse
580**
**CH-8052 Zürich (CH)**

EP 0 410 162 B1

Jouve, 18, rue Saint-Denis, 75001 PARIS

## Beschreibung

Die Erfindung betrifft eine Einrichtung zur Seitenruder-Trimmung d.h. zum Einhalten der Flugrichtung bei Änderung der Fluggeschwindigkeit oder der Triebwerkleistung an einem Propeller-Flugzeug mit einem Seitenruder, an dem eine Trimmklappe angelenkt ist, mit einem Trimmotor zum Verschwenken der Trimmklappe, mit einem Fluggeschwindigkeitssensor und einem Drehmomentsensor zur Bestimmung der Fluggeschwindigkeit und zum Messen des Propeller-Drehmomentes.

Es ist bekannt, dass propellergetriebene Flugzeuge, ganz besonders aber Flugzeuge mit nur einem Triebwerk eine ausgeprägte Abhängigkeit der Flugrichtung von der Triebwerksleistung und der Fluggeschwindigkeit aufweisen.

Der Propeller erzeugt einen sich drehenden, auf die Aussenhülle des Flugkörpers prallenden Luftstrahl, der mit jeder Änderung der Triebwerksleistung oder der Fluggeschwindigkeit zwangsläufig auch seinen Drall sowie seine Intensität ändert. Durch diese Änderungen ergeben sich Abweichungen in der Flugrichtung des Flugzeuges, welche durch geeignete Schwenkung des Seitenruders ausgeglichen werden müssen, derart, dass eine seitliche Schiebekraft verschwindet. Diese Schwenkung des Seitenruders wurde bisher vom Piloten ausgeführt. Diese Schwenkung ist besonders dann notwendig, wenn sich die Triebwerkleistung ändert oder wenn sich die Fluggeschwindigkeit vergrössert oder verkleinert und erfordert dann eine zusätzliche Aufmerksamkeit des Piloten, wodurch er von seiner eigentlichen Aufgabe der Flugzeugführung abgelenkt wird.

Eine mechanische Einrichtung zur Seitenruder-Trimmung für Propellerflugzeuge ist aus US-A-2 057 877 bekannt. Diese Einrichtung kompensiert eine Änderung des Triebwerk-Vermögens und die daraus resultierende Drehmomentreaktion um die Längsachse des Flugzeugs durch eine pneumatische Verstellung der Trimmklappen; dazu werden die vermögensabhängige Variationen des Ladedrucks im Triebwerkeinlaß benutzt. Eine Abhängigkeit dieser Kompensation von der Fluggeschwindigkeit ist nicht vorgesehen.

Die Aufgabe, die nun mit der vorliegenden Erfindung gelöst werden soll, besteht in der Schaffung einer Einrichtung, welche die Arbeit des Piloten und insbesondere die Seitenruder-Trimmung erleichtert. Diese Einrichtung, mit der diese Aufgabe gelöst wird und die als "Trim-Hilfe" oder "Trim-Aid" bezeichnet werden kann, ist dadurch gekennzeichnet, dass mit Hilfe eines elektronischen Steuergerätes anhand der mit den Sensoren gemessenen Fluggeschwindigkeit und des gemessenen Propeller-Drehmomentes die Trimmklappe automatisch durch den Trimmmotor in die erforderliche Stellung geschwenkt wird.

Durch dieses elektronische Steuergerät wird der Pilot weitgehend davon entlastet, bei Änderungen der Triebwerksleistung und der Fluggeschwindigkeit die Trimmklappe zu verschwenken.

Ein Ausführungsbeispiel der erfindungsgemässen Einrichtung zur Seitenruder-Trimmung ist im folgenden anhand der beigefügten Zeichnung ausführlich beschrieben. Es zeigt:

Fig.1 eine perspektivische Darstellung eines Flugzeuges mit dem durch den Propeller erzeugten schraubenförmigen Luftstrahl;

Fig.2 ein Diagramm, aus dem die Auslenkung des Seitenruders in Funktion der Triebwerksleistung und in Funktion der Fluggeschwindigkeit ersichtlich ist;

Fig.3 eine schematische Darstellung der gesamten Einrichtung, die einerseits an einen Geschwindigkeitsmesser, an einen Leistungsmesser, an Schalter und an einen Seitenruderantrieb angeschlossen ist;

Fig.4 und 5 ein Blockdiagramm der gesamten Einrichtung.

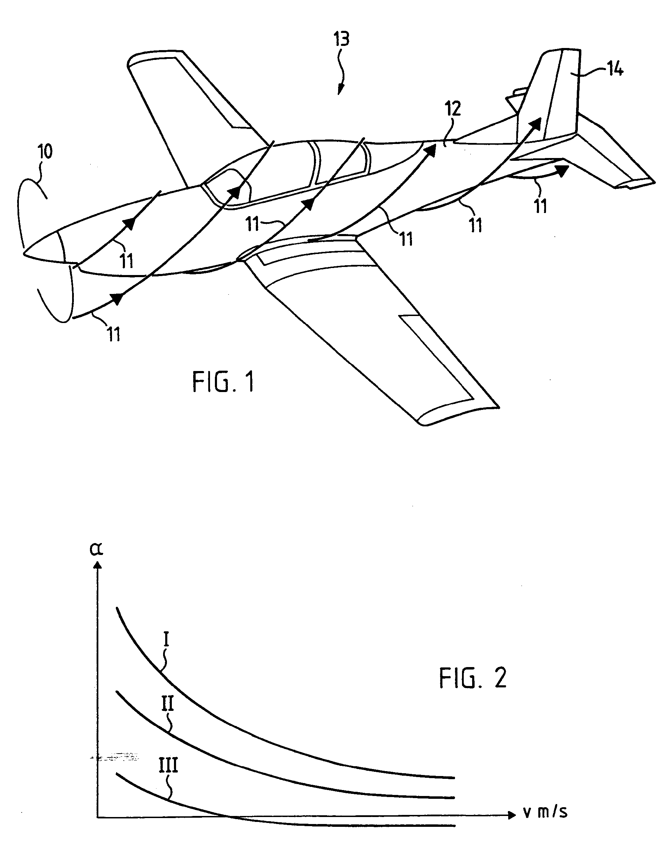

Gemäss Fig.1 wird durch einen Propeller 10 ein schraubenförmiger Luftstrahl 11 oder Luftstrom erzeugt, der durch Pfeile angedeutet ist und der sich um den Rumpf 12 des Flugzeuges 13 windet. Dieser Luftstrom 11 ändert sich mit der Flugzeuggeschwindigkeit und mit der Triebwerksleistung. Dieser Luftstrom 11 beaufschlagt das Seitenruder 14 einseitig. Da die Triebwerksleistung proportional zum Drehmoment der Propeller-Welle ist, genügt es für die vorliegende Einrichtung, das Drehmoment der Propeller-Welle zu messen. Bei wachsender Triebwerksleistung, d.h. bei wachsendem Wellen-Drehmoment vergrössert sich bei z.B. konstanter Fluggeschwindigkeit die einseitige Beaufschlagung des Seitenruders 14.

Bei wachsender Fluggeschwindigkeit vergrössert sich auch bei konstanter Triebwerksleistung ebenfalls die einseitige Beaufschlagung des Seitenruders 14.

Mit anderen Worten, die Richtung der Pfeile, welche den Luftstrom 11 andeuten, ist von der Triebwerksleistung und von der Fluggeschwindigkeit abhängig, d.h. vom dynamischen Druck des Luftstromes 11 und vom Verhältnis zwischen der Geschwindigkeit des Luftstrahles und der Flugzeuggeschwindigkeit.

In Fig.2 ist der Zusammenhang zwischen der erforderlichen Stellung der Trimmklappen 22 des Seitenruders 14 d.h. dem Schwenkwinkel $\alpha$ gegenüber einer Ausgangslage der Trimmklappen 22 des Seitenruders 14 und der Fluggeschwindigkeit v einerseits und drei verschiedenen Triebwerksleistungen I, II und III andererseits dargestellt. Aus diesem Diagramm ist ersichtlich, dass der erforderliche Schwenkwinkel $\alpha$ der Trimmklappen 22 des Seitenruders 14 sich einerseits mit der Fluggeschwindigkeit und andererseits mit der Triebwerksleistung ändert.

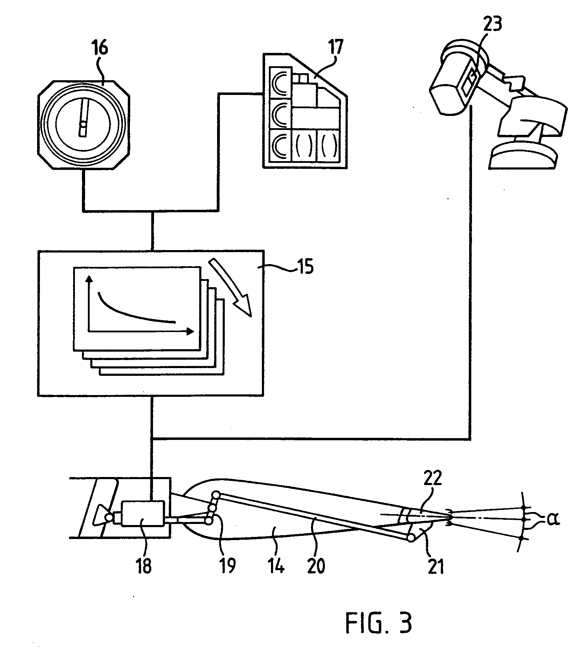

Erfindungsgemäss wird nun mit Hilfe einer elektronischen Steuereinrichtung die Trimmklappe 22 des Seitenruders 14 in Funktion der Fluggeschwindigkeit und in Funktion der Triebwerksleistung d.h. des Propellerdrehmomentes eingestellt, dadurch wird die bisher erforderliche Trimmtätigkeit des Piloten zum Ausgleichen der Seitenkräfte bei Änderung der Triebwerksleistung und bei Änderung der Fluggeschwindigkeit weitgehend ersetzt. Diese Einrichtung, d.h. das elektronische Steuergerät weist Sensoren auf zum Erfassen der Fluggeschwindigkeit und des Propeller-Drehmomentes, um dann die Trimmklappen des Seitenruders 14 zu verschwenken, wie weiter unten anhand von Fig.3 noch näher erläutert ist. Das Gerät weist einen Speicher auf, der die in Fig.2 dargestellen Werte enthält. Der Pilot ist jedoch in der Lage, die Funktion des Gerätes jederzeit zu überwachen und die Wirkung des Gerätes zu beeinflussen, d.h. Falscheinstellung der Seitenruder 14 bzw. der Trimmklappen 22 zu korrigieren.

Gemäss Fig.3 ist ein elektronisches Steuergerät 15 vorhanden, in welchem die aus Fig.2 entnehmbaren Werte in digitaler Form gespeichert sind. Somit ist jeder Fluggeschwindigkeit und den drei verschiedenen Triebwerksleistungen I, II und III ein entsprechender Trimmklappen-Auslenkwinkel bzw. Schwenkwinkel $\alpha$ zugeordnet. Dieses Gerät 15 ist nun einerseits an einen Fluggeschwindigkeitssensor 16, d.h. an das Gerät zur Anzeige der Fluggeschwindigkeit angeschlossen und andererseits an einen Drehmomentsensor 17, d.h. an das Gerät zur Anzeige der Triebwerksleistung oder des Propellerdrehmomentes angeschlossen. Ferner ist das Steuergerät 15 an einen Antriebsmotor 18 angeschlossen. Dieser Antriebsmotor ist über ein Gestänge 19,20,21 mit der Trimmklappe 22 des Seitenruders 14 verbunden, um diese Klappe 22 um den jeweils erforderlichen Winkel $\alpha$ zu verschwenken.

Mit Hilfe eines vom Piloten betätigbaren Schalters 23 kann die elektrische Verbindung zwischen dem elektronischen Gerät 15 und dem Antriebsmotor 18 beeinflusst werden. Mit anderen Worten: Mit Hilfe des Schalters 23 ist der Pilot in der Lage, den Winkel $\alpha$ d.h. die Stellung der Trimmklappe 22 willkürlich zu beeinflussen.

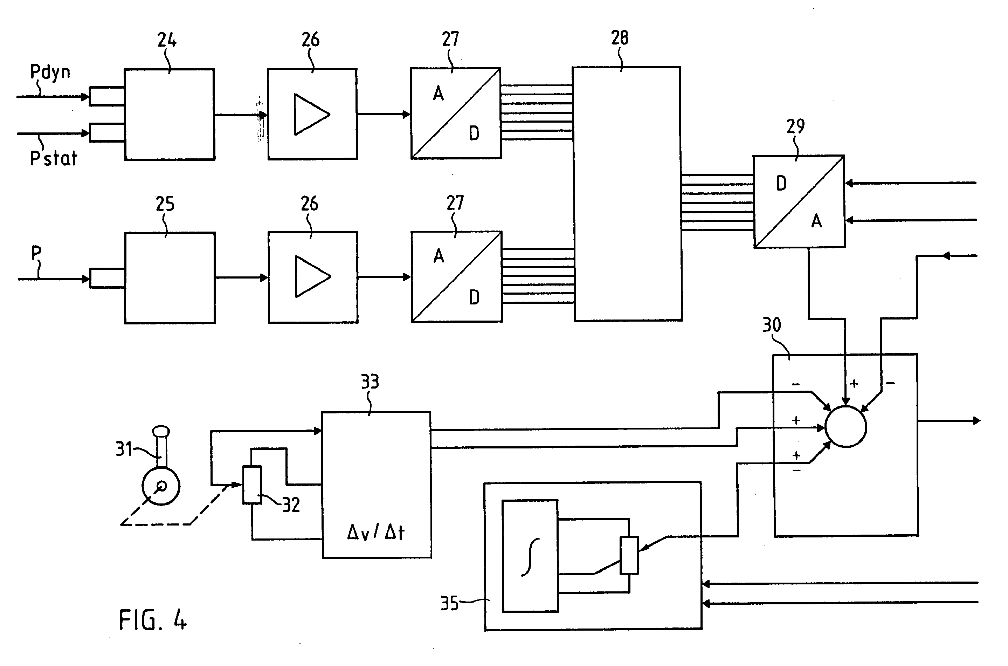

Gemäss Fig.4 wird mit einem Differenzdrucksensor 24, der einen Teil des bereits erwähnten Fluggeschwindigkeitssensors 16 darstellt, die Differenz zwischen einem dynamischen Druck Pdyn und einem statischen Druck Pstat bestimmt. Diese Differenz entspricht der Fluggeschwindigkeit. Ferner wird mit einem Druckmesser 25, der einen Teil des bereits erwähnten Drehmomentsensors 17 darstellt, ein Öldruck gemessen, der proportional zum Drehmoment der Propeller-Welle ist. Zwischen der Fluggeschwindigkeit v und dem Drehmoment q des Triebwerkes, d.h. der Propeller-Welle besteht ein Zusammenhang gemäss der Formel q = 1/2 . p . v².

Diese Werte werden in Sensoren 24 und 25 in elektrische Signale umgewandelt und in Verstärkern 26 verstärkt. Die verstärkten elektrischen Analogsignale werden in den A/D-Wandlern 27 in digitale Signale umgewandelt. Die Digitalwerte gelangen in ein Steuergerät 28, das den erwähnten Speicher enthält, mit den in Fig.2 dargestellten Werten. In diesem Steuergerät 28 werden die erforderlichen Schwenkwinkel $\alpha$ der Trimmklappe 22 bestimmt. In einem weiteren D/A Wandler 29 werden diese digitalen Werte wieder in analoge Werte - sogenannte Sollwerte - umgewandelt. Die Sollwerte gelangen auf einen Summierer 30 und bewirken die gewünschte Auslenkung der Seitenruder-Trimmklappe 22.

Die Einrichtung weist noch folgende zusätzliche Elemente auf:

Gemäss Fig.4 ist ein Hebel 31 zum Einstellen der Motorleistung mit einem Potentiometer 32 verbunden. Dieses ist an einen Differenzierer 33 angeschlossen, der seinerseits mit dem Summierer 30 verbunden ist. Bei einer plötzlichen Stellungsänderung des Leistungshebels 31, um die Leistung des Motors für den Antrieb des Propellers zu vergrössern oder zu verkleinern, verstreicht eine gewisse Zeit bis der Motor anspricht, entsprechend der Trägheit des Motors. In dieser Zeit kann jedoch eine entsprechende Korrektur der Trimmklappenstellung eingeleitet werden. Die Betätigung des Leistungshebels 31 bewirkt eine sofortige Verstellung des Potentiometers 32, wodurch über den Differnzierer 33 ein Signal an den Summierer 30 weitergeleitet wird, sodass die Trimmklappe 22 rechtzeitig verstellt werden kann, sobald das Flug-Triebwerk seine Leistung ändert. Auf diese Weise wird ein sogenannter Trimmvorlauf erreicht.

Ein Impulsschalter 34 ermöglicht es dem Piloten, die Stellung der Trimmklappe 22 zusätzlich von Hand zu betätigen. Dieser Impulsschalter 34 ist an einen Integrator 35 angeschlossen, der seinerseits mit dem Summierer 30 verbunden ist. Der Integrator ist in der Lage, die manuellen Kommandos, die der Pilot bei Betätigung des Impulsschalters 34 erzeugt, in eine analoge Spannung mit linear steigendem oder fallendem Kurvenverlauf umzuwandeln. Diese Spannung gelangt dann als Korrekturgrösse auf den Summierer 30.

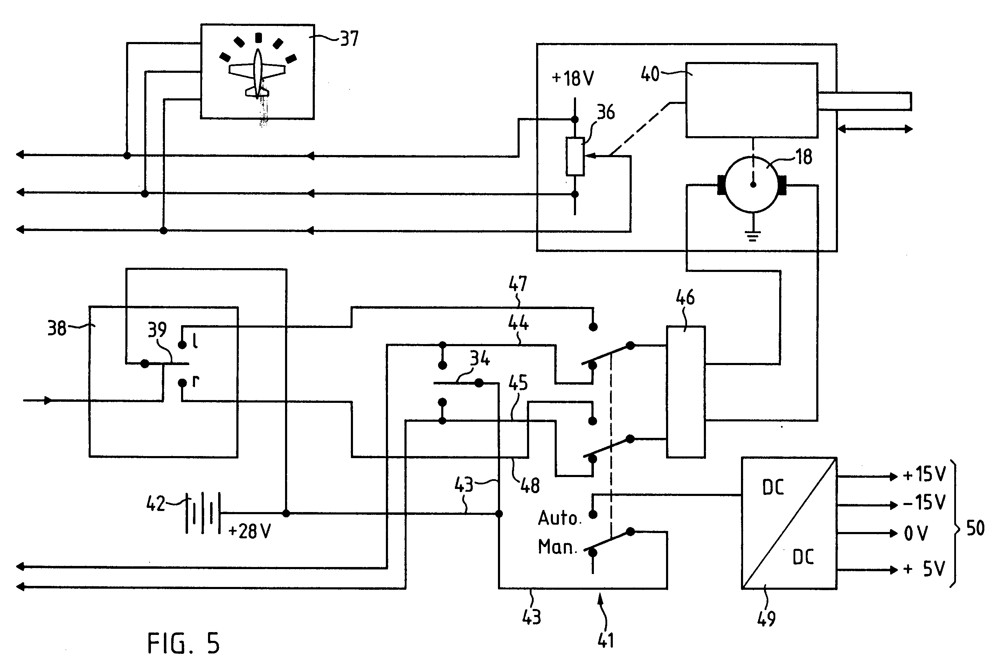

Ein Trimmotor-Potentiometer 36 (Fig.5) ist ebenfalls mit dem Summierer 30 verbunden und erzeugt ein Signal, das dem Istwert der Stellung der Trimmklappe 22 entspricht. Der Summierer 30 ist somit in der Lage, ein Signal zu erzeugen, das dem Differenzwert zwischen Soll- und Istwert entspricht.

Eine Anzeigevorrichtung 37 ist an das Trimmotor-Potentiometer 36 (Fig.5) angeschlossen und zeigt die Stellung der Trimmklappe 22 an.

Gemäss Fig.4 und 5 ist ein Dreipunkt-Regler 38 an den Summierer 30 angeschlossen. Je nach dem Differenzwert, den der Summierer erzeugt, kann dieser Dreipunkt-Regler 38 eine Verschwenkung der Trimmklappe 22 nach links oder nach rechts bewirken. Durch den Summierer 30 kann ein Hebel 39 des Dreipunkt-Reglers 38 aus der gezeigten Mittelstellung nach links (l) oder nach rechts (r) verschwenkt werden.

Gemäss Fig.5 wird vom Antriebsmotor 18, der auch als Trimmotor 18 bezeichnet wird, über ein Untersetzungsgetriebe 40 einerseits die Trimmklappe 22 (Fig.3) und andererseits das Potentiometer 36 betätigt. Ein Schalter 41 ermöglicht es, die ganze Einrichtung auf automatische oder manuelle Steuerung der Trimmklappe 22 umzuschalten. In der gezeigten Stellung des Schalters 41 kann der Pilot mit Hilfe des Impulsschalters 34 direkt die Trimmklappe 22 nach rechts oder links verschwenken, indem er den Impulsschalter 34 nach rechts oder links verschwenkt. Von der Spannungsquelle 42 gelangt eine Spannung von 28 Volt über Leitung 43 und über Schalter 34 entweder auf Leitung 44, um die Trimmklappe 22 über Relais 46 und Motor 18 nach links zu schwenken oder auf Leitung 45, um die Trimmklappe 22 über Relais 46 und Motor 18 nach rechts zu schwenken.

Wird der Schalter 41 aus der gezeigten Stellung heraus umgeschaltet, so ist der erwähnte Dreipunkt-Regler 38 mit dem Schaltrelais 46 verbunden. Falls der Hebel 39 des Dreipunkt-Schalters 38 nach links (l) geschwenkt wird, gelangt ein Impuls über Leitung 47 auf das Relais 46 und bewirkt über Motor 18 eine Verschwenkung der Trimmklappe 22 nach links. Falls der Hebel 39 des Dreipunkt-Schalters 38 nach rechts (r) geschwenkt wird, gelangt ein Impuls über Leitung 48 auf das Relais 46 und bewirkt über Motor 18 eine Verschwenkung der Trimmklappe 22 nach rechts.

Beim Umschalten des Schalters 41 aus der gezeigten Stellung auf automatische Steuerung gelangt Spannung aus Leitung 43 zu einem Spannungswandler 49 und von diesem Wandler 49 zu allen in Fig.4 und 5 dargestellten Organen. Dies ist aber in Fig.4 und 5 nur durch vier Leitungen 50 angedeutet.

## Bezugsziffernliste

| | | |
|---|---|---|
| 10 | Propeller | |
| 11 | Luftstrahl-Luftstrom | |
| 12 | Rumpf des Flugzeuges | |
| 13 | Flugzeug | |
| 14 | Seitenruder | |
| 15 | Steuergerät | |
| 16 | Fluggeschwindigkeitssensor | |
| 17 | Drehmomentsensor | |
| 18 | Antriebsmotor, Trimmotor | |
| 19) | | |
| 20) | Gestänge | |
| 21) | | |
| 22 | Trimmklappe | |
| 23 | Schalter | |
| 24 | Differenzdrucksensor | |
| 25 | Druckmesser | |
| 26 | Verstärker | |
| 27 | A/D Wandler | |
| 28 | Steuergerät EPROM | |
| 29 | D/A Wandler | |
| 30 | Summierer | |
| 31 | Leistungshebel | |
| 32 | Potentiometer | |
| 33 | Differenzierer | |
| 34 | Impulsschalter, Trimmschalter | |
| 35 | Integrator | |
| 36 | Potentiometer | |
| 37 | Anzeigevorrichtung | |
| 38 | Dreipunkt-Regler | |
| 39 | Hebel | |
| 40 | Unterstützungsgetriebe | |
| 41 | Schaltrelais | |
| 42 | Spannungsquelle | |
| 43 | Leitung | |
| 44 | Leitung | |
| 45 | Leitung | |
| 46 | Relais | |
| 47 | Leitung | |
| 48 | Leitung | |
| 49 | Wandler | |
| 50 | Leitung | |

$\alpha$  Schwenkwinkel des Seitenruders bzw. Trimmklappe

**Patentansprüche**

1. Einrichtung zur Seitenruder-Trimmung, d.h. zum Einhalten der Flugrichtung bei Änderung der Fluggeschwindigkeit (v) oder der Triebwerksleistung (q) an einem Propeller-Flugzeug, mit einem Seitenruder (14), an dem eine Trimmklappe (22) angelenkt ist, mit einem Trimmotor (18) zum Verschwenken der Trimmklappe (22), mit Organen (23) zum Betätigen des Trimmotors (18), mit einem Fluggeschwindigkeitssensor (16) und einem Drehmomentsensor (17) zur Bestimmung der Fluggeschwindigkeit des Flugzeuges und des Drehmomentes an der Propellerwelle, dadurch gekennzeichnet, dass mit Hilfe eines elektronischen Steuergerätes (15) anhand der mit den Sensoren (16,17) gemessenen Fluggeschwindigkeit und des gemessenen Propeller-Drehmomentes die Trimmklappe (22) automatisch durch den Trimmotor (18)

5

in die erforderliche Stellung geschwenkt wird.

2.   Einrichtung nach Anspruch 1, dadurch gekennzeichnet, dass das Steuergerät (15,28) einen Speicher aufweist, der die für die Auslenkung der Trimmklappe (22) erforderlichen Sollwerte des Schwenkwinkels ($\alpha$) in Funktion der Fluggeschwindigkeit (v) und in Funktion des Drehmomentes (q) der Propellerwelle enthält, wobei diese Sollwerte rechnerisch und experimentell bestimmt sind.

3.   Einrichtung nach Anspruch 2, dadurch gekennzeichnet, dass das Steuergerät (15) an folgende Organe angeschlossen ist:

a) einen Differenzdrucksensor (24) zur Bestimmung der Fluggeschwindigkeit (v);

b) einen Druckmesser (25) zur Bestimmung des Drehmomentes (q) der Propellerwelle;

c) einen Differenzierer (33) zur Bestimmung von Leistungsänderungen des Triebwerkes bei der Betätigung des Leistungshebels (31);

d) einen Integrator (35) für die Integration der durch den Pilot mit dem Trimmschalter (34) erzeugten Impulse zum Verschwenken der Trimmklappe (22).

## Claims

1: Device for trimming the rudder, i.e. for maintaining the flight direction whilst changing the airspeed (v) or the engine output (q) of a propeller aircraft having a rudder (14) with hinged on trim tab (22), a trimmer motor (18) for pivoting the trim tab (22), with elements (23) for operating the trimmer motor (18), with an airspeed sensor (16) and a torque sensor (17) for determining the airspeed of the aircraft and the torque at the propeller shaft, **characterised in that** the trim tab (22) can be automatically pivoted into a required position by the trimmer motor (18) with the aid of an electronic control unit (15) and based on the airspeed measured by the sensors (16, 17) and the measured propeller torque.

2: Device according to claim 1, **characterised in that** the control unit (15, 28) has a store containing nominal values of the pivot angle ($\alpha$) in function of the airspeed (v) and in function of the torque (q) of the propeller shaft, as required for adjustment of the trim tab (22), whereby these nominal values are determined by computer and experimentally.

3: Device according to claim 2, **characterised in that** the control unit (15) is connected to the following elements:

a) a differential-pressure sensor (24) for determining the airspeed (v);

b) a pressure gauge (25) for determining the torque (q) of the propeller shaft;

c) a differentiator (33) for determining output changes of the engine during operation of the output lever (31);

d) an integrator (35) for integration of pulses for pivoting the trim tab (22) produced by the pilot and the trim switch (34).

## Revendications

1) Installation de compensation de la gouverne de direction, c'est-à-dire pour conserver le cap (direction de vol) en cas de variation de vitesse de vol v ou de variation de puissance motrice q dans le cas d'un avion à hélice comportant une gouverne de direction (14) sur laquelle est articulé un volet compensateur (22) avec un moteur de compensation (18) pour pivoter le volet compensateur (22), des organes (23) pour actionner le moteur de compensation (18), un capteur de vitesse de vol (16) et un capteur de couple (17) pour déterminer la vitesse de vol de l'avion et le couple sur l'arbre de l'hélice, installation caractérisée par un dispositif de commande électronique (15) qui reçoit la vitesse de vol mesurée par les capteurs (16, 17) et le couple de l'hélice, mesuré, et qui bascule automatiquement le volet compensateur (22) dans la position requise à l'aide du moteur de compensation (18).

2) Installation selon la revendication 1, caractérisée en ce que les dispositifs de commande (15, 28) comportent une mémoire contenant les grandeurs de consigne nécessaires de l'angle de pivotement $\alpha$ pour pivoter le volet compensateur (22), angle pris en fonction de la vitesse de vol v et du couple q de l'arbre de l'hélice, ces grandeurs de consigne étant déterminées par le calcul et de manière expérimentale.

3) Installation selon la revendication 2, caractérisée en ce que l'appareil de commande (15) est reliée aux organes suivants :

a) un capteur de différences de pression (24) pour déterminer la vitesse de vol v,

b) un capteur de pression (25) pour déterminer le couple q de l'arbre de l'hélice,

c) un différentiateur (33) pour déterminer les variations de puissance du moteur lors de l'actionnement du levier de puissance (31) (manette des gaz).

d) un intégrateur (35) pour intégrer les impulsions générées par le pilote avec le commutateur de compensation (34) pour pivoter le volet compensateur (22).

FIG. 1

FIG. 2

FIG. 3

FIG. 4

EP 0 410 162 B1

FIG. 5